# EUROPEAN PATENT APPLICATION

(11) **EP 4 848 877 A1**
(43) Date of publication of application: **02.12.2026**
(21) Application number: 25751199.8
(22) Date of filing: 21.01.2025
(51) Int. Cl.: H04W 76/10, H04W 36/00

(54) **COMMUNICATION METHOD AND APPARATUS**

(30) Priority: 09.02.2024 CN 202410179061
(71) Applicant: HUAWEI TECHNOLOGIES CO., LTD., Shenzhen, Guangdong 518129 (CN)
(72) Inventor: LI, Yongcui, Shenzhen, Guangdong 518129 (CN)
(74) Representative: Huawei European IPR
(86) International application number: PCT/CN2025/073697
(87) International publication number: WO 2025/167597

(57) **Abstract**

A communication method and apparatus are provided, to implement details of MEC technologies. The method may be implemented by using the following steps: A session management function network element receives first information, where the first information indicates that traffic steering needs to be performed for a service, the service is associated with a session of a terminal, an IP anchor point of the session is a first user plane network element, the first user plane network element can access a first data network, and the first data network is used for providing the service for the terminal. The session management function network element may further determine a second user plane network element of the session based on the first information, where the traffic steering includes traffic steering between the first data network and a second data network, the second user plane network element can access the second data network, and the second data network is used for providing the service for the terminal.

## Description

### CROSS-REFERENCE TO RELATED APPLICATIONS

This application claims priority to Chinese Patent Application No. 202410179061.2, filed with the China National Intellectual Property Administration on February 9, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

The rapid development of mobile communication has facilitated the continuous emergence of various new services. In addition to traditional mobile broadband and the internet of things, the mobile communication has given rise to many new application fields, such as augmented reality (augmented reality, AR)/virtual reality (virtual reality, VR), the internet of vehicles, industrial control, and the internet of things (internet of things, IoT). In addition, mobile communication technologies have imposed higher demands on performance such as network bandwidth and delays, further increasing network load.

Currently, mobile edge computing (mobile edge computing, MEC) technologies may be used for providing low-latency and high-bandwidth services for terminal devices. How to implement details of the MEC technologies has become a technical problem to be urgently resolved.

### SUMMARY

This application provides a communication method and apparatus, to implement details of MEC technologies.

According to a first aspect, a communication method is provided. The method may be implemented by a first communication apparatus. The first communication apparatus may be a session management network element or a component in a session management network element. The session management network element may be a session management function (session management function, SMF) network element, or may be a network element. This is not specifically limited. The component in this application may include, for example, at least one of a chip, a chip system, a processor, a transceiver, a processing unit, or a transceiver unit. For example, the method is performed by the session management function network element. The method may be implemented by using the following steps: The session management function network element receives first information, where the first information indicates that traffic steering needs to be performed for a service, the service is associated with a session of a terminal, an internet protocol (internet protocol, IP) anchor point of the session is a first user plane network element, the first user plane network element can access a first data network, and the first data network is used for providing the service for the terminal. The session management function network element may further determine a second user plane network element of the session based on the first information, where the traffic steering includes traffic steering between the first data network and a second data network, the second user plane network element can access the second data network, and the second data network is used for providing the service for the terminal.

According to the method shown in the first aspect, the session management function may obtain the first information indicating that the traffic steering needs to be performed for the service, and determine, based on the first information, the second user plane network element of the session associated with the service, to determine the user plane network element, so that the traffic steering is performed for the service from the first data network to the second data network. In addition, the first user plane network element of the session may be used as the IP anchor point. Therefore, based on the first user plane network element and the second user plane network element, the service can be provided for the terminal in the first data network and the second data network, and MEC technologies across a plurality of data networks may be implemented.

In an optional implementation, the first information is included in first policy information, and the first policy information indicates to determine the second user plane network element based on the first information. According to this implementation, the session management function network element may determine the second user plane network element based on the first information when determining, based on the first policy information, that the traffic steering is required. Therefore, the first policy information may be used for enabling the session management function network element in this application to determine the second user plane network element based on the first information. The first policy information may be from a policy control function network element.

In an optional implementation, the first data network includes a first local data network, and the second data network includes a second local data network; or the first data network includes a first local data network, and the second data network includes a central data network.

According to this implementation, traffic steering between different local data networks may be supported, or traffic steering between a local data network and a central data network may be supported, to implement MEC technologies in a plurality of traffic steering scenarios.

In an optional implementation, the second data network includes the central data network. That the session management function network element determines the second user plane network element of the session based on the first information includes: The session management function network element determines, as the second user plane network element, a user plane network element that can access all local data networks. According to this implementation, in a traffic steering scenario between a local data network and a central data network, the session management function network element may select, as the second user plane network element, the user plane network element that can access all local data networks, to properly determine the second user plane network element.

In an optional implementation, the second data network includes the central data network, and a delay for the first data network to provide the service for the terminal is shorter than a delay for the second data network to provide the service for the terminal; or a distance between the first user plane network element and the terminal is less than a distance between the second user plane network element and the terminal.

In an optional implementation, the first information includes indication information of the second data network. The indication information of the second data network may be used for determining the second user plane network element, to properly and efficiently determine the second user plane network element.

In an optional implementation, the first information is from a policy control function network element or the terminal.

In an optional implementation, the first information is included in a session establishment request from the terminal; or the first information is included in a session modification request from the terminal.

In an optional implementation, the method further includes: The session management function network element sends second information, where the second information indicates that the traffic steering is accepted. Optionally, the second information may include a data network access identifier (data network access identifier, DNAI), indicating the second data network, or indicating a location of the second data network.

According to a second aspect, a communication method is provided. The method may be performed by a second communication apparatus. The second communication apparatus may be a policy control function network element or a component in a policy control function network element. The policy control function network element is, for example, a policy control function (policy control function, PCF). The component in this application may include, for example, at least one of a chip, a chip system, a processor, a transceiver, a processing unit, or a transceiver unit. For example, the method is performed by the policy control function network element. The method may be implemented by using the following steps: The policy control function network element receives first information from an application function network element, where the first information indicates that traffic steering needs to be performed for a service, the service is associated with a session of a terminal, an IP anchor point of the session is a first user plane network element, the first user plane network element can access a first data network, and the first data network is used for providing the service for the terminal. The policy control function network element sends policy information based on the first information, where the policy information indicates to determine a second user plane network element of the session based on the first information, the traffic steering includes traffic steering between the first data network and a second data network, the second user plane network element can access the second data network, and the second data network is used for providing the service for the terminal.

It may be understood that, the policy control function network element receiving the first information from the application function network element may mean that the policy control function network element receives, from the application function network element, an indication or information indicating or used for determining the first information. For example, the policy control function network element receives traffic steering information from the application function network element, where the traffic steering information may indicate that the traffic steering needs to be performed for the service, or the traffic steering information may indicate or be used for determining the first information, or the traffic steering information may include the first information. The traffic steering information may be the same as or different from the first information.

In an optional implementation, the first information is included in the policy information.

In an optional implementation, the first data network includes a first local data network, and the second data network includes a second local data network; or the first data network includes a first local data network, and the second data network includes a central data network.

In an optional implementation, the first information includes indication information of the second data network.

In an optional implementation, the method further includes: The policy control function network element may further receive second information, where the second information indicates that the traffic steering is accepted.

For beneficial effects of the technical solutions shown in the second aspect and the possible implementations of the second aspect, refer to descriptions of beneficial effects of the first aspect and the corresponding technical solutions of the first aspect.

For beneficial effects of the second aspect and the possible implementations of the second aspect, refer to descriptions of beneficial effects of the first aspect and the corresponding implementations of the first aspect. Repeated parts are not described again.

According to a third aspect, a communication method is provided. The method may be performed by a third communication apparatus. The third communication apparatus may be an application function network element or a component in an application function network element. A policy control function network element is, for example, an application function (application function, AF). The component in this application may include, for example, at least one of a chip, a chip system, a processor, a transceiver, a processing unit, or a transceiver unit. For example, the method is performed by the policy control function network element. The method may be implemented by using the following steps: The application function network element sends first information, where the first information indicates that traffic steering needs to be performed for a service, the service is associated with a session of a terminal, an internet protocol IP anchor point of the session is a first user plane network element, the first user plane network element can access a first data network, and the first data network is used for providing the service for the terminal. The traffic steering includes traffic steering between the first data network and a second data network.

In an optional implementation, the first data network includes a first local data network, and the second data network includes a second local data network; or the first data network includes a first local data network, and the second data network includes a central data network.

In an optional implementation, the first information includes indication information of the second data network.

It may be understood that, the application function network element sending the first information may mean that the application function network element sends an indication or information indicating or used for determining the first information. For example, the application function network element sends traffic steering information to the policy control function network element, where the traffic steering information may indicate that the traffic steering needs to be performed for the service, or the traffic steering information may indicate or be used for determining the first information, or the traffic steering information may include the first information. The traffic steering information may be the same as or different from the first information.

For beneficial effects of the third aspect and the possible implementations of the third aspect, refer to descriptions of beneficial effects of the first aspect and the corresponding implementations of the first aspect. Repeated parts are not described again.

According to a fourth aspect, a communication method is provided. The method may be performed by a fourth communication apparatus. The fourth communication apparatus may be a terminal device or a component in a terminal device. The component in this application may include, for example, at least one of a chip, a chip system, a processor, a transceiver, a processing unit, or a transceiver unit. For example, the method is performed by a policy control function network element. The method may be implemented by using the following steps: The terminal device receives first information from a policy control function network element, where the first information indicates that traffic steering needs to be performed for a service, the service is associated with a session of the terminal, an IP anchor point of the session is a first user plane network element, the first user plane network element can access a first data network, and the first data network is used for providing the service for the terminal. The terminal device sends the first information to a session management network element.

It may be understood that, the terminal device receiving the first information from the policy control function network element may mean that the terminal device receives, from the policy control function network element, an indication or information indicating or used for determining the first information. For example, the terminal device receives a terminal route selection policy (UE route selection policy, URSP) from the policy control function network element. The URSP may indicate that the traffic steering needs to be performed for the service, or the URSP may indicate or be used for determining the first information, or the URSP may include the first information.

In an optional implementation, the first data network includes a first local data network, and the second data network includes a second local data network; or the first data network includes a first local data network, and the second data network includes a central data network.

In an optional implementation, the first information includes indication information of the second data network.

In an optional implementation, the method further includes: The terminal device may further receive second information, where the second information indicates that the traffic steering is accepted. Optionally, the second information may include a DNAI, indicating the second data network, or indicating a location of the second data network.

In an optional implementation, the first information is included in a session establishment request; or the first information is included in a session modification request.

In an optional implementation, the sending the first information to the session management network element includes: determining, based on attribute information of the session, that the session supports the service; and sending the session modification request, where the first information is included in the session modification request.

According to this implementation, when determining that an established session supports the service, the terminal device may modify the session, so that the session meets a service flow positioning requirement indicated by the first information.

In an optional implementation, the sending the first information to the session management network element includes: determining, based on attribute information of an established session of the terminal, that the established session does not support the service; and sending the session establishment request, where the first information is included in the session establishment request.

According to this implementation, when determining that the established session does not support the service, the terminal device may establish a new session, so that the new session meets a service flow positioning requirement indicated by the first information.

In an optional implementation, the sending the first information to the session management network element includes: determining, based on indication information of a data network of an established session and/or traffic steering information, that the established session does not support the traffic steering, where the traffic steering information indicates whether the established session supports the traffic steering; and sending the session establishment request, where the first information is included in the session establishment request.

According to this implementation, when determining that the established session does not support the traffic steering, the terminal device may establish a new session, so that the new session meets a service flow positioning requirement indicated by the first information.

For beneficial effects of the fourth aspect and the possible implementations of the fourth aspect, refer to descriptions of beneficial effects of the first aspect and the corresponding implementations of the first aspect. Repeated parts are not described again.

According to a fifth aspect, a communication apparatus is provided. The apparatus may implement the method according to any one of the first aspect to the fourth aspect or the possible implementations of the first aspect to the fourth aspect. The apparatus has functions of the first communication apparatus to the fourth communication apparatus. The apparatus is, for example, an SMF, a PCF, an AF, or a terminal device, or a function module or a chip in an SMF, a PCF, an AF, or a terminal device.

In an optional implementation, the apparatus may include modules that are in one-to-one correspondence with the methods/operations/steps/actions according to any one of the first aspect to the fourth aspect or the possible implementations of the first aspect to the fourth aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for the functional modules.

For example, when the apparatus is configured to perform the method described in any one of the first aspect to the fourth aspect, the apparatus may include the communication unit and the processing unit.

According to a sixth aspect, an embodiment of this application further provides a communication apparatus, including a processor, configured to execute a computer program (or computer-executable instructions) stored in a memory. When the computer program (or the computer-executable instructions) is executed, the apparatus is caused to perform the method according to any one of the first aspect to the fourth aspect or the possible implementations of the first aspect to the fourth aspect.

In a possible implementation, the processor and the memory are integrated together.

In another possible implementation, the memory is located outside the communication apparatus.

The communication apparatus further includes a communication interface. The communication interface is used for communication between the communication apparatus and another device, for example, for data and/or signal sending or receiving. For example, the communication interface may be a transceiver, a circuit, a bus, a module, or another type of communication interface.

According to a seventh aspect, a computer-readable storage medium is provided. The computer-readable storage medium is configured to store a computer program or instructions. When the computer program or the instructions are run, the method according to any one of the first aspect to the fourth aspect or the possible implementations of the first aspect to the fourth aspect is implemented.

According to an eighth aspect, a computer program product including instructions is provided. When the computer program product runs on a computer, the method according to any one of the first aspect to the fourth aspect or the possible implementations of the first aspect to the fourth aspect is implemented.

According to a ninth aspect, an embodiment of this application further provides a communication apparatus, configured to perform the method according to any one of the first aspect to the fourth aspect or the possible implementations of the first aspect to the fourth aspect.

According to a tenth aspect, a chip system is provided. The chip system includes a logic circuit (or is understood as that the chip system includes a processor and the processor may include a logic circuit or the like), and may further include an input/output interface. The input/output interface may be configured to input a message, or may be configured to output a message. The input/output interface may be a same interface. To be specific, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method according to any one of the first aspect to the fourth aspect or the possible implementations of the first aspect to the fourth aspect. The logic circuit may be further configured to transmit a message to the input/output interface, or receive, from the input/output interface, a message from another communication apparatus. The chip system may be configured to implement the method according to either of the first aspect and the second aspect and the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to an eleventh aspect, a communication method is provided. The communication method may include the method implemented by the first communication apparatus according to any one of the first aspect and the possible implementations of the first aspect, the method implemented by the second communication apparatus according to any one of the second aspect and the possible implementations of the second aspect, the method implemented by the second communication apparatus according to any one of the third aspect and the possible implementations of the third aspect, or the method implemented by the second communication apparatus according to any one of the fourth aspect and the possible implementations of the fourth aspect.

According to a twelfth aspect, a communication system is provided. The communication system may include at least one of a first communication apparatus to a fourth communication apparatus. The first communication apparatus may be configured to implement the method according to any one of the first aspect and the possible implementations of the first aspect, the second communication apparatus may be configured to implement the method according to any one of the second aspect and the possible implementations of the second aspect, the third communication apparatus may be configured to implement the method according to any one of the third aspect and the possible implementations of the third aspect, and the fourth communication apparatus may be configured to implement the method according to any one of the fourth aspect and the possible implementations of the fourth aspect.

For technical effects of the fifth aspect to the twelfth aspect, refer to descriptions of beneficial effects of corresponding solutions in the first aspect and the second aspect. Details are not described herein again.

### BRIEF DESCRIPTION OF DRAWINGS

FIG. 1 is a diagram of an architecture of a wireless communication system;
FIG. 2 is a diagram of an MEC architecture;
FIG. 3 is a schematic flowchart of a communication method according to an embodiment of this application;
FIG. 4 is a diagram of an MEC architecture according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a location of a session anchor point;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

Embodiments of this application provide a communication method and apparatus. The method and an apparatus are based on a same inventive concept. The method and the apparatus have similar principles for resolving problems. Therefore, for implementations of the apparatus and the method, refer to each other. Repeated parts are not described again.

The method provided in embodiments of this application may be applied to a 4th generation (4th generation, 4G) communication system, for example, a long term evolution (long term evolution, LTE) communication system; or may be applied to a 5th generation (5th generation, 5G) communication system, for example, a 5G new radio (new radio, NR) communication system; or may be applied to various future communication systems, for example, a 6th generation (6th generation, 6G) communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system. It may be understood that, the buffer status report determining method provided in embodiments of this application may be applied to another communication system.

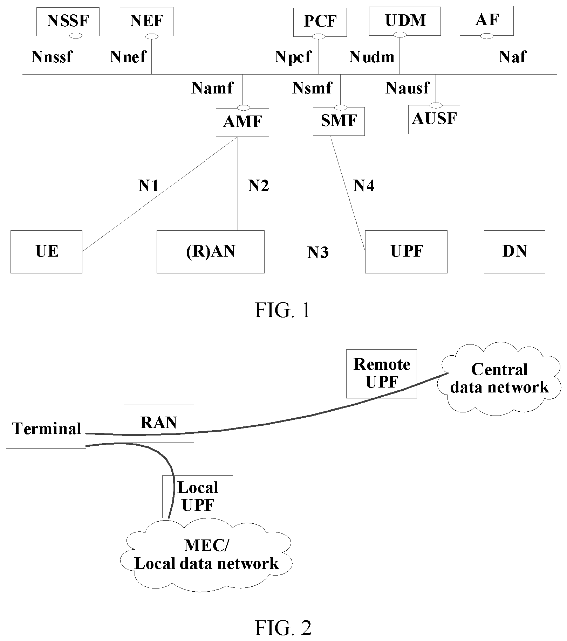

FIG. 1 shows a possible example of an architecture of a 5th generation mobile communication system (the 5th generation system, 5GS). The architecture of the communication system may include a terminal device, a (radio) access network ((radio) access network, (R)AN), and a core network (core network). For example, in the architecture of the communication system, the radio access network may include an access network device. The core network may include a network exposure function (network exposure function, NEF) network element, a PCF network element, a unified data management (unified data management, UDM) function network element, an AF network element, an access and mobility management function (access and mobility management function, AMF) network element, an SMF network element, and a user plane function (user plane function, UPF) network element. The AMF network element may be connected to the access network device through an N2 interface, the access network device may be connected to the UPF through an N3 interface, the SMF may be connected to the UPF through an N4 interface, the AMF network element may be connected to UE through an N1 interface, and the UPF may be connected to the DN through an N6 interface. An interface name is merely an example for description and is not specifically limited in embodiments of this application. It should be understood that, embodiments of this application are not limited to the communication system shown in FIG. 1. Names of the network elements shown in FIG. 1 are merely used as examples for description herein, and are not used as limitations on the network elements included in the architecture of the communication system to which the method in this application is applicable. The following describes functions of the network elements or devices in the communication system in detail.

The terminal device may be referred to as a terminal for short, user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed train), a virtual reality (virtual reality, VR) device, an augmented reality (augmented reality, AR) device, a smart point of sale (point of sale, POS) machine, customer premises equipment (customer premises equipment, CPE), a wireless terminal in industrial control, a smart home device (for example, a refrigerator, a television, an air conditioner, or an electric meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device with a terminal function. For example, the terminal device may alternatively be a device that has a terminal function in D2D communication. In this application, a terminal device with a wireless transceiver function and a chip that may be disposed in the terminal device are collectively referred to as a terminal device. A device form of the terminal is not limited in embodiments of this application.

The (R)AN device is a device that provides access for a terminal device, and includes a radio access network (radio access network, AN) device and an access network (access network, AN) device. The RAN device is mainly a 3GPP network wireless network device, and the AN device may be an access network device defined in non-3GPP. The RAN device is mainly responsible for functions such as radio resource management, quality of service (quality of service, QoS) management, and data compression and encryption on an air interface side. In systems using different radio access technologies, names of devices having a base station function may vary. For example, in a 5G system, the device is referred to as a RAN device, a gNB (5G NodeB), or the like.

In a possible scenario, the (R)AN device may be a base station (base station), an evolved NodeB (evolved NodeB, eNodeB) in 4G, an access point (access point, AP), a transmission reception point (transmission reception point, TRP), a next generation NodeB (next generation NodeB, gNB) in 5G, a base station in a 6th generation (6th generation, 6G) mobile communication system, a base station in a future mobile communication system, a satellite, an access node in a Wi-Fi system, or the like. The network device may be a macro base station (for example, 110a in FIG. 1), a micro base station or an indoor station (for example, 110b in FIG. 1), a relay node or a donor node, or a radio controller in a CRAN scenario. The (R)AN device may alternatively be a device with a base station function in device-to-device (device-to-device, D2D) communication, internet of vehicles communication, or machine communication. Optionally, the (R)AN device may alternatively be a server, a wearable device, a vehicle, a vehicle-mounted device, or the like. For example, an access network device in a vehicle-to-everything (vehicle-to-everything, V2X) technology may be a road side unit (road side unit, RSU). The (R)AN device may alternatively be a network device in an open access network (open RAN, O-RAN, or ORAN) system.

In another possible scenario, a plurality of (R)AN devices collaborate to assist a terminal in implementing radio access, and different (R)AN devices separately implement a part of functions of a base station. For example, the (R)AN device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the (R)AN device may be a CU node, a DU node, or a device including a CU node and a DU node. In addition, the CU may be classified as a network device in an access network RAN, or the CU may be classified as a network device in a core network CN. This is not limited herein.

For example, in an open access network system, the CU may alternatively be referred to as an open CU (O-CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In different systems, the CU (or the CU-CP and the CU-UP), the DU, or the RU may also have different names, but a person skilled in the art may understand meanings thereof. For example, in an ORAN system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The access and mobility management function network element may be configured for access control and mobility management of a terminal device. In actual application, the access and mobility management function network element includes a mobility management function of a mobility management entity (mobility management entity, MME) in a long term evolution (long term evolution, LTE) network architecture, and includes an access management function. The access and mobility management function network element may specifically handle registration of the terminal device, mobility management, a tracking area update procedure, reachability detection, selection of a session management function network element, mobility state transition management, and the like. For example, in 5G, the access and mobility management function network element may be an AMF network element, for example, as shown in FIG. 1. In future communication, for example, in 6G, the access and mobility management function network element may still be an AMF network element or have another name. This is not limited in this application. When the access and mobility management function network element is the AMF network element, the AMF may provide an Namf service.

The session management function network element may be configured to handle session management (including session establishment, modification, and release) of a terminal device, selection and re-selection of a user plane function network element, internet protocol address allocation of the terminal device, quality of service (quality of service, QoS) control, and the like. For example, in 5G, the session management function network element may be an SMF network element, for example, as shown in FIG. 1. In future communication, for example, in 6G, the session management function network element may still be an SMF network element or have another name. This is not limited in this application. When the session management function network element is the SMF network element, the SMF may provide an Nsmf service.

The user plane function network element is responsible for user data forwarding and receiving in a terminal device. The user plane function network element may receive user data from a data network, and transmit the user data to the terminal device via an access network device. The UPF network element may further receive the user data from the terminal device via an access network device, and forward the user data to a data network. Transmission resources and scheduling functions that are used by the UPF network element to provide a service for the terminal device are managed and controlled by an SMF network element. For example, in 5G, the user plane function network element may be a UPF network element, for example, as shown in FIG. 1. In future communication, for example, in 6G, the user plane function network element may still be a UPF network element or have another name. This is not limited in this application.

In addition, in the architecture shown in FIG. 1, if there is another UPF, namely, an intermediate-UPF (intermediate-UPF, I-UPF), between the (R)AN device and the UPF, an interface between the RAN and the I-UPF is referred to as an N3 interface, and an interface between the I-UPF and the UPF is referred to as an N9 interface. Both N3 and N9 are interfaces at a user session granularity, and are used for transmitting a user packet by using a general packet radio service (general packet radio service, GPRS) tunneling protocol for the user plane (GPRS tunneling protocol for the user plane, GTP-U).

In the following descriptions, to distinguish different functions of the UPF, a branching point (branching point, BP), an uplink classifier (uplink classifier, ULCL), a protocol data unit (protocol data unit, PDU) session anchor (PDU session anchor, PSA), and a local-PSA (local-PSA, L-PSA) are separately used for description. The BP/ULCL may be configured to provide an offloading function. The PSA may be used as a user plane session anchor UPF. Unless otherwise specified, the PSA may be a PSA deployed on a central data network side. The L-PSA is used for accessing a local network, and may alternatively be referred to as a PSA deployed on a local network or a local data network. A plurality of the BP, the ULCL, the PSA, and the L-PSA may be deployed together. For a session, a PSA may be used as an IP anchor point. The IP anchor point may be an L-PSA, or may be a PSA deployed on a central data network side. In this application, the session may be a PDU session.

The policy control function network element mainly supports a unified policy framework to govern network behavior and provides a policy rule to a control plane network function, for example, an SMF or an AMF, and is responsible for obtaining user subscription information for a policy decision. For example, in 5G, the policy control function network element may be a PCF network element, for example, as shown in FIG. 1. In future communication, for example, in 6G, the policy control function network element may still be a PCF network element or have another name. This is not limited in this application. When the policy control function network element is the PCF network element, the PCF network element may provide an Npcf service.

The network exposure function network element mainly supports secure interaction between a 3GPP network and a third-party application. For example, in 5G, the network exposure function network element may be an NEF network element, for example, as shown in FIG. 1. In future communication, for example, in 6G, the network exposure function network element may still be an NEF network element or have another name. This is not limited in this application. When the network exposure function network element is the NEF, the NEF may provide an Nnef service for another network function network element.

The application function network element mainly supports interacting with a 3GPP core network to provide a service, for example, exerting influence on a data routing decision, a policy control function, or some third-party services provided for a network side. For example, in 5G, the application function network element may be an AF network element, for example, as shown in FIG. 1. In future communication, for example, in 6G, the application function network element may still be an AF network element or have another name. This is not limited in this application. When the application function network element is the AF network element, the AF network element may provide an Naf service.

The unified data management function network element is configured for generation of authentication credentials, user identification handling (for example, storage and management of permanent user identifiers), access authorization control, subscription data management, and the like. For example, in 5G, the unified data management function network element may be a UDM network element, for example, as shown in FIG. 1. In future communication, for example, in 6G, the unified data management function network element may still be a UDM network element or have another name. This is not limited in this application. When the unified data management function network element is the UDM network element, the UDM network element may provide an Nudm service.

The data network (data network, DN) is a service network that provides a data transmission service for a user, for example, an IP multi-media service (IP multi-media service, IMS) or an internet (Internet).

A terminal device may access a DN through a path established between the terminal device and the DN. The session may be understood as a channel that is included in the path between the terminal device and the DN and that is located between a base station and a UPF.

Each network element in the core network may alternatively be referred to as a functional entity or device, and may be a network element implemented on dedicated hardware, a software instance running on dedicated hardware, or an instance of a virtualization function on an appropriate platform. For example, the virtualization platform may be a cloud platform.

It should be noted that, the architecture of the communication system shown in FIG. 1 is not limited to including only the network elements shown in the figure, and may further include another device not shown in the figure. Details are not described herein in this application one by one.

It should be noted that, a distribution form of the network elements is not limited in embodiments of this application. The distribution form shown in FIG. 1 is merely an example, and is not limited in this application.

For ease of description, in this application, the network elements shown in FIG. 1 are used as examples for description below, and an XX network element is directly referred to as XX for short. For example, the SMF network element is referred to as an SMF for short. It should be understood that, names of all network elements in this application are merely used as examples, and may alternatively be referred to as other names in future communication, or the network element in this application may be replaced by another entity or device that has a same function in future communication. This is not limited in this application. Unified descriptions are provided herein. Details are not described below again.

It should be noted that, the communication system shown in FIG. 1 does not constitute a limitation on a communication system to which embodiments of this application are applicable. The architecture of the communication system shown in FIG. 1 is a 5G system architecture. Optionally, the method in embodiments of this application is further applicable to various future communication systems, for example, a 6G or another communication network.

An MEC architecture is further evolved based on the 5G system architecture. As shown in FIG. 2, compared with a central data network (central DN), the MEC may be deployed in an edge area (or referred to as a local data network (local DN)) closer to an end user, and is used for providing a service for the user. In other words, a delay for the local data network to provide a service for a terminal is less than a delay for the central data network to provide the service for the same terminal. In other words, a service, a service handling function, and a resource scheduling function are deployed on an edge network close to the end user to provide reliable and ultimate service experience. As shown in FIG. 2, the MEC is deployed at a distributed UPF (namely, a local UPF), and the central data network is deployed at a remote UPF (remote UPF). Compared with a path for the terminal device to access the central data network, a path for the terminal device to access an MEC platform is greatly shortened. Therefore, MEC technologies may provide low-latency and high-bandwidth services for users.

Currently, how to implement details of the MEC technologies has become a technical problem to be urgently resolved. For example, for some services, there is a requirement for traffic steering (traffic steering) of user services. In this application, the traffic steering may mean that a service needs to access a plurality of different data networks or a plurality of data networks at different locations. In this case, how to properly select a user plane network element is a technical problem to be urgently resolved currently.

This application provides a communication method. The communication method may be implemented by one or more of a session management network element, a policy control function network element, an application function network element, or a terminal device, or may be implemented by an apparatus in one or more of the foregoing network elements or devices. The session management network element may be an SMF or another network element, device, or apparatus that has a session management function. The policy control function network element may be a PCF or another network element, device, or apparatus that supports policy determining. The application function network element may be an AF or another network element, device, or apparatus that has an application function. The terminal device may be UE or the like. This is not specifically limited.

The following describes the communication method shown in this application by using an example in which the SMF is used as a session management network element, an example in which the PCF is used as a policy control function network element, an example in which the AF is used as an application function network element, and an example in which the UPF is used as a user plane network element.

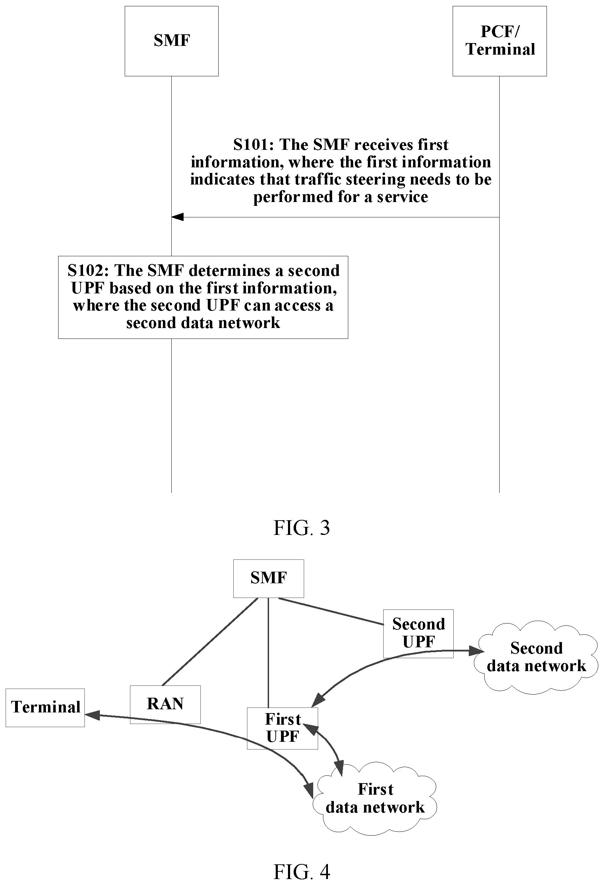

As shown in FIG. 3, a communication method provided in embodiments of this application includes the following steps.

S101: An SMF receives first information.

The first information may indicate that traffic steering needs to be performed for a service. The traffic steering may be traffic steering between a first data network and a second data network. The service may be associated with a session of a terminal. For example, the session supports transmission of the service. An IP anchor point of the session may be a first UPF. In other words, an IP address of the terminal is anchored to the first UPF. It may be understood that, the first UPF may belong to or be deployed in the first data network, or the first UPF can (or supports) access (or access or connect to) the first data network. In an example of the first information, the first information may be traffic steering information (traffic steering information) of the service.

In this application, the first data network and the second data network may be two data networks at different locations. A DNAI for accessing the first data network may be different from a DNAI for accessing the second data network. The first data network and the second data network may have a same data network name (DN name, DNN), and a service of the first data network and a service of the second data network may correspond to same network slice information. Therefore, the first data network and the second data network may provide a same service, and the service may include the service in S101. In this application, the network slice information includes, for example, single network slice selection assistance information (S-NSSAI), and the S-NSSAI may indicate a network slice.

In an example, the first data network may be a local data network, and the second data network may be a local data network or a central data network.

The local data network in this application is a data network in which network entities are deployed in a distributed manner. The central data network may be a data network in which network entities are deployed in a centralized manner or deployed at high locations. Alternatively, the local data network may be understood as a data network closer to a terminal, and the central data network may be understood as a data network farther from the same terminal. Alternatively, the local data network may be understood as a data network with a shorter delay for providing a service for a terminal, and the central data network may be understood as a data network with a longer delay for providing the same service for the same terminal. Alternatively, a distance between a terminal and a user plane network element that accesses the local data network is shorter than a distance between the terminal and a user plane network element that accesses the central data network. Alternatively, a delay between a terminal and a user plane network element that accesses the local data network is shorter than a delay between the terminal and a user plane network element that accesses the central data network.

It may be understood that, the local data network and the central data network in a plurality of data networks may be determined based on a value relationship between delays for the plurality of data networks to provide the service for the terminal. For example, the plurality of data networks include a data network 1 and a data network 2. When a delay for the data network 1 to provide the service for the terminal is shorter than a delay for the data network 2 to provide the service for the terminal, the data network 1 may be used as the local data network, and the data network 2 may be used as the central data network. In addition, the local data network and the central data network in a plurality of data networks may be determined based on a value relationship between distances from the plurality of data networks (or UPFs connected to the data networks) to the terminal. For example, the plurality of data networks include a data network 1 and a data network 2. When a distance from the data network 1 (or a UPF connected to the data network 1) to the terminal is less than a distance from the data network 2 (or a UPF connected to the data network 2) to the terminal, the data network 1 may be used as the local data network, and the data network 2 may be used as the central data network.

In a possible implementation, the first data network and the second data network are different local data networks. For example, locations of the first data network and the second data network are different. In other words, the first information may indicate that traffic steering between a first local data network and a second local data network needs to be performed for the service, or the traffic steering includes traffic steering between a first local data network and a second local data network. This may be referred to as a first traffic steering scenario for short below.

For example, the first information may include indication information of the second local data network. The first information may further include indication information of the first local data network.

Indication information of a local data network may indicate the local data network, or indicate a location of the local data network, or indicate a location for accessing the local data network, or indicate an identifier of a user plane connection for accessing the local data network. For example, the indication information of the local data network may be a DNAI.

For example, when the traffic steering includes the first traffic steering scenario, the first information may include a DNAI of the first local data network and/or a DNAI of the second local data network.

In another possible implementation, the first data network is a local data network, and the second data network is a central data network. In other words, the first information may indicate that traffic steering between the local data network (for example, a first local data network) and the central data network needs to be performed for the service, or the traffic steering includes traffic steering between the local data network and the central data network. This may be referred to as a second traffic steering scenario for short below.

Correspondingly, the first information may include indication information of the local data network, for example, a DNAI of the local data network.

Optionally, in the second traffic steering scenario, the first information may include indication information indicating the central data network, or include indication information indicating that a UPF (namely, a second UPF) that accesses the second data network corresponds to all local data networks, or include indication information indicating that the UPF does not correspond to any local data network, or include indication information indicating that the UPF can access all local data networks. Alternatively, the indication information and the first information may be sent to the SMF together. For example, the indication information and the first information are included in a same message or same signaling.

In addition, in the second traffic steering scenario, the first information may include an identifier of a specific data network, for example, a specific (specific) DNAI or specific S-NSSAI. The identifier of the specific data network corresponds to the central data network, or the identifier of the specific data network may indicate that the traffic steering between the local data network and the central data network needs to be performed for the service.

In addition, the first information may alternatively indicate only the traffic steering. In this case, the traffic steering between the first data network and the central data network may be performed by default.

In a possible implementation, the first information may not indicate a plurality of data networks among which traffic steering is performed, and only needs to indicate to perform the traffic steering. In this case, data networks among which the traffic steering is performed may be determined according to a default rule. For example, the traffic steering may be traffic steering between the first local data network and the central data network by default. Alternatively, the SMF may request a PCF for a configuration or policy that can further indicate or be used for determining the first data network and/or the second data network.

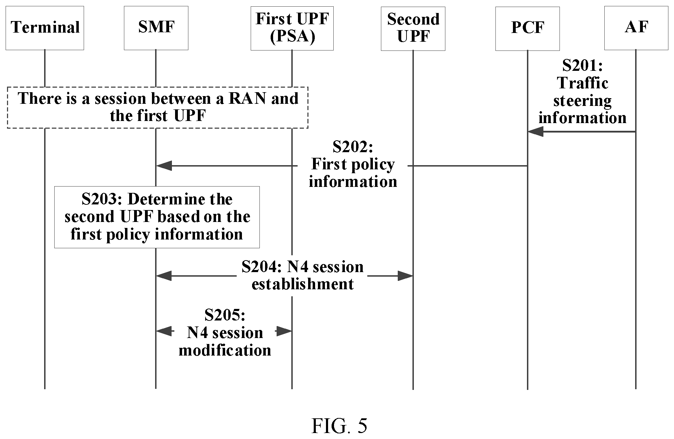

In an implementation of S101, the SMF may receive first policy information from the PCF. The first policy information may indicate to determine (or be used for determining) a second user plane network element of the session based on the first information. The first policy information may include the first information, or the first policy information may indicate the first information, or indicate that the traffic steering needs to be performed for the service. For example, the first policy information may be a policy and charging control (policy and charging control, PCC) rule of the first information, or the first policy information may be included in a PCC rule, or the first policy information may be included in a session policy. The first policy information may be determined by the PCF based on traffic steering information provided by an AF. The traffic steering information may be the same as or different from the first information. The traffic steering information may indicate or be used for determining that the traffic steering needs to be performed for the service, or the traffic steering information may indicate or be used for determining the first information, or the traffic steering information may include the first information. With reference to FIG. 5, the following describes a manner in which the SMF determines the second user plane network element according to the PCC rule. Details are not described herein.

In another implementation of S101, the SMF may receive the first information from the terminal. For example, the first information is included in a session establishment request or a session modification request sent by the terminal device to the SMF. The session establishment request or the session modification request may be sent by the terminal device based on second policy information. The second policy information may be used by the terminal device to determine a requirement corresponding to the service. For example, the second policy information may include the first information indicating that the traffic steering needs to be performed for the service. The SMF may determine the second user plane network element of the session based on the requirement corresponding to the service. For example, the second policy information may be a URSP. The second policy information may be determined by the PCF based on the traffic steering information provided by the AF. The traffic steering information may be the same as or different from the first information. The traffic steering information may indicate or be used for determining that the traffic steering needs to be performed for the service, or the traffic steering information may indicate or be used for determining the first information, or the traffic steering information may include the first information.

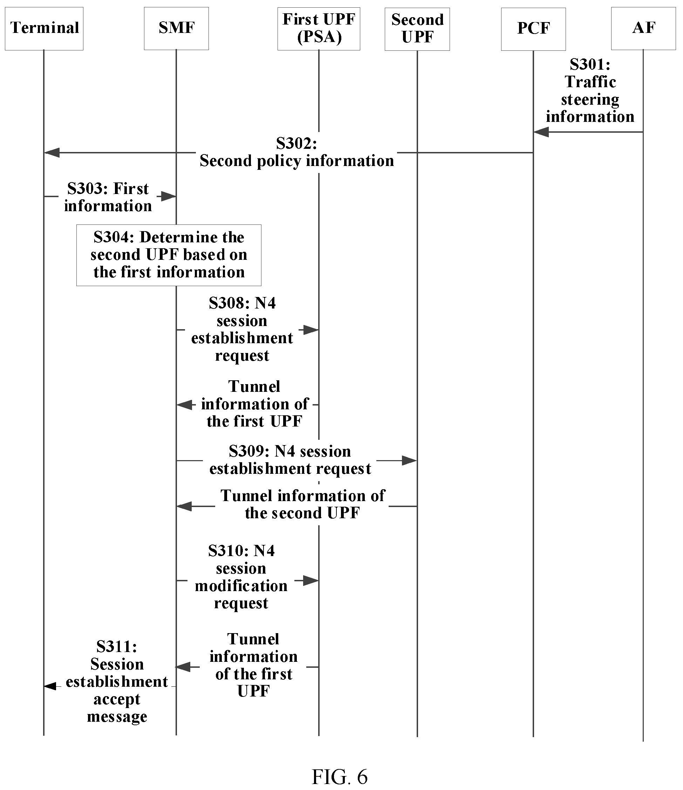

With reference to FIG. 6, the following describes this implementation by using a procedure in which the terminal device initiates session establishment or modification based on the URSP. Details are not described herein.

S102: The SMF determines the second UPF of the session based on the first information.

The second UPF may be configured to transmit the service in the second data network. For example, the second UPF may be used as an upstream node or a downstream node of the first UPF. In an example, for downlink service data, the second UPF may be used as an upstream node of the first UPF. For example, the second UPF is used as a previous-hop node of the first UPF. Alternatively, one or more UPFs may be further included between the second UPF and the first UPF, and the first UPF may receive the downlink service data from the second UPF via the one or more UPFs. For uplink service data, the second UPF may be used as a downstream node of the first UPF. For example, the second UPF is used as a next-hop node of the first UPF. Alternatively, one or more UPFs may be further included between the second UPF and the first UPF, and the second UPF may receive the uplink service data from the first UPF via the one or more UPFs.

In the first traffic steering scenario, the second UPF may support or allow access to the second local data network, or the UPF supports or allows establishment of a connection to the central data network.

It may be understood that, in the first traffic steering scenario, the SMF may determine the second UPF based on the indication information of the second data network. For example, the SMF may determine, as the second UPF based on the indication information of the second local data network, a UPF supporting access to the second local data network. An identifier of the second local data network may be included in the first information, or included in a PCC rule, or included in a session policy, or may be included in a message sent together with the first information. The message is, for example, a message carrying the PCC rule.

In the second traffic steering scenario, the second UPF may correspond to the central data network. The UPF corresponding to the central data network may mean that the UPF supports or allows access to the central data network, or the UPF supports or allows establishment of a connection to the central data network.

In the second traffic steering scenario, the second UPF may be determined based on one or more of indication information indicating that the second UPF corresponds to all local data networks, indication information indicating that the second UPF does not correspond to any local data network, or indication information indicating that the second UPF can access all local data networks. For example, the SMF may determine, as the second UPF, a UPF that can access all local data networks. For another example, the SMF may determine, as the second UPF, a UPF that does not correspond to the indication information of any local data network. The indication information may be included in the first information, or may be sent to the SMF together with the first information. For example, the indication information and the first information may be included in a PCC rule sent by the PCF to the SMF, or may be included in a message sent by the terminal device to the SMF. It may be understood that, there may alternatively be no indication information. In this case, the SMF determines, as the second UPF based on the received first information, a UPF that can access all local data networks, or a UPF that does not correspond to the indication information of any local data network.

It may be understood that, when detecting the service, the SMF may perform S102 to determine the second UPF. For example, after receiving the first policy information, the SMF may detect whether there is a service or a service flow related to the first policy information in the session. When there is the service or the service flow related to the first policy information, the SMF performs S102 to select the second UPF. When there is no service or service flow related to the first policy information, the SMF does not select the second UPF until a related service or service is detected. For example, if the SMF receives the first information from the PCF in S101, when the service is detected, S102 may be performed, that is, before S102, it may be further determined that the service is detected.

A method for detecting the service by the SMF may be implemented in at least the following two manners.
(1) The SMF sends a rule to the first UPF, where the rule indicates the first UPF to send notification information to the SMF when detecting the service. The notification information may represent or indicate that the service is detected. The service may be represented or identified by an IP 5-tuple or IP 3-tuple.
(2) The SMF delivers a rule to an edge application server discovery function (edge application server discovery function, EASDF), where the rule indicates the EASDF to send notification information to the SMF when detecting the service. The notification information may represent or indicate that the service or the service flow is detected. In this case, the service may be represented or identified by a fully qualified domain name (fully qualified domain name, FQDN).

Based on the procedure shown in FIG. 3, the SMF may determine the second UPF based on the first information. Then, the SMF may establish or update a user plane path based on the determined second UPF.

In this application, for a relationship between the first UPF, the second UPF, the first data network, and the second data network, refer to FIG. 4. In FIG. 4, an arrow may be used for identifying a service transmission path. It may be understood that, a location relationship between the first data network and the second data network is not limited in FIG. 4. To be specific, a distance between the second data network and the terminal may be greater than, equal to, or less than a distance between the first data network and the terminal. For example, when both the first data network and the second data network are local data networks, the distance between the second data network and the terminal may be greater than, equal to, or less than the distance between the first data network and the terminal. For another example, when the first data network is a local data network and the second data network is a central data network, the distance between the second data network and the terminal may be greater than the distance between the first data network and the terminal.

In a possible embodiment, when the first information in S101 is from the terminal, if the terminal device determines that an established session of the terminal device supports the service, the terminal device may include the first information in the session modification request. If the terminal device determines that an established session of the terminal device does not support the service, the terminal device may include the first information in the session establishment request associated with the service.

In an example, the terminal may determine, based on attribute information of an established session of the terminal and/or indication information of a data network, whether the established session supports the service.

The attribute information of the established session may include a DNN or slice information of a data network of the established session. The indication information of the data network may include a DNAI of a data network of the established session.

It may be understood that, when the terminal device determines that the established session supports the service, the terminal device may include the first information in a modification request for the established session, to request to modify the established session. In this case, the established session is associated with the service in S101. Therefore, a session does not need to be re-established, and the traffic steering can be implemented by associating the session with the second user plane network element.

The terminal device determining that the established session supports the service may mean that the DNN and/or the slice information of the data network associated with the established session is the same as a DNN and/or slice information of a data network required by the service, that is, the established session supports transmission of the service.

In addition, when the terminal device determines that the established session does not support the service, the terminal device may include the first information in an establishment request for a new session of the service, to request to modify the established session. In other words, the first UPR and the second UPF are UPFs of the new session.

Optionally, when determining that the established session does not meet the traffic steering indicated by the first information, the terminal device may further include the first information in the establishment request for the new session of the service. That the established session does not meet the traffic steering indicated by the first information may mean that a data network of the established session does not include the first data network and/or the second data network, or may mean that the established session does not support the traffic steering.

For example, the terminal device may determine, based on indication information of the data network of the established session, whether the established session meets the traffic steering indicated by the first information. For example, the terminal device may search for the indication information of the data network of the established session. When the indication information of the established session includes indication information of the first data network and indication information of the second data network, the terminal device may determine that the established session meets the traffic steering indicated by the first information. When the indication information of the established session does not include indication information of the first data network and/or indication information of the second data network, the terminal device may determine that the established session does not meet the traffic steering indicated by the first information.

Indication information of a data network may be a DNAI of the data network. Alternatively, for the central data network, the indication information may be indication information indicating that the UPF corresponds to all local data networks, indication information indicating that the UPF does not correspond to any local data network, or indication information indicating that the UPF can access all local data networks.

For another example, the terminal device may determine, based on traffic steering information of an established session, whether the established session meets the traffic steering indicated by the first information. The service flow information of the established session may indicate traffic steering of the established session. For the traffic steering information, refer to descriptions of the first information in this application. For example, the service flow information of the established session may at least indicate that the session supports traffic steering between a third data network and a fourth data network. For example, if the third data network is the same as the first data network, and the fourth data network is the same as the second data network, the terminal device may determine that the established session meets the traffic steering indicated by the first information.

If the established session is not associated with the traffic steering information, the terminal device may determine that the established session does not support the traffic steering, in other words, the terminal device may determine whether the established session meets the traffic steering indicated by the first information.

In addition, if the established session of the terminal device meets the traffic steering indicated by the first information, the terminal device may provide the service for the terminal by using the established session, and does not need to establish a new session or modify the established session.

It may be understood that, in this application, one or more of the attribute information of the established session of the terminal device, the indication information of the data network of the established session, or the traffic steering may be associated with a URSP of the established session, for example, included in the URSP of the established session. For example, if the URSP corresponding to the established session includes information indicating that the traffic steering needs to be performed for the service, it may be considered that the established session supports the traffic steering. The URSP corresponding to the established session is a URSP used for establishing the session.

In other words, if the terminal device determines that the currently established session supports the service, in S101, the terminal device may send, to the SMF, the session modification request carrying the first information, to trigger the SMF to modify the established session. Correspondingly, both the first UPF and the second UPF are UPFs of the established session, so that the established session meets the traffic steering indicated by the first information. If the terminal device determines that the currently established session does not support the service, in S101, the terminal device may send, to the SMF, the session establishment request carrying the first information, to trigger the SMF to establish a new session. Correspondingly, both the first UPF and the second UPF are UPFs of the new session, so that the new session supports the service and meets the traffic steering indicated by the first information. If the terminal device determines that the currently established session does not meet the traffic steering indicated by the first information, in S101, the terminal device may send, to the SMF, the session establishment request carrying the first information, to trigger the SMF to establish a new session. Correspondingly, both the first UPF and the second UPF are UPFs of the new session, so that the new session supports the service and meets the traffic steering indicated by the first information. If the terminal device determines that the currently established session supports the service and meets the traffic steering indicated by the first information, the terminal device may use the established session to transmit the service, and does not need to establish a new session or modify the session.

In a possible embodiment of this application, the SMF may further send second information, indicating that the first information or the traffic steering of the service is accepted. For example, the SMF may send the second information to the PCF or the terminal, as an accept feedback of the first information in S101. Optionally, the SMF may further send the indication information of the first data network and/or the indication information of the second data network.

In a possible embodiment of this application, the SMF may further determine, based on third information, to terminate the traffic steering of the session. The third information may indicate that the traffic steering does not need to be performed for the service.

Specifically, after receiving the third information, the SMF may modify the session based on the third information, to delete the second UPF of the session, so that a modified session does not support the traffic steering, or a modified session does not support access to the second data network. The second UPF may be a UPF inserted based on the first information.

In an implementation, before modifying an established session, the SMF may determine whether the session has another service for which traffic steering needs to be performed. If there is another service for which traffic steering needs to be performed, the SMF does not delete the second UPF, to avoid interruption of the another service. If there is no other service, the SMF deletes the second UPF, to save session resources.

In an implementation, before modifying a session, the SMF may determine whether the session is associated with the traffic steering. If the session is still associated with the traffic steering, the second UPF may be deleted by modifying the session. If the session is not associated with the traffic steering, it may indicate that the second UPF has been deleted, or it indicates that the session does not include the second UPF, and the SMF may not perform any operation.

Optionally, the SMF may determine, based on a session context or session-related policy information, whether the session has another service for which traffic steering needs to be performed, or whether the session is associated with the traffic steering. The SMF may store the previously received first information or first policy information in the session context. The session-related policy information may include a PCC rule. For example, if the SMF receives the first policy information from the PCF, the session-related policy information may include the first policy information.

If the session context or the session-related policy information includes the first information or the first policy information that is previously received by the SMF and that indicates that the traffic steering needs to be performed for the service, it indicates that the session still has another service for which traffic steering needs to be performed, or that there is still an association relationship between the session and the traffic steering. Correspondingly, the SMF does not delete the second UPF. On the contrary, if the session context or the session-related measurement information does not include the first information or the first policy information, the SMF may delete the second UPF. Optionally, the SMF may further delete the first information or the first policy information in the session context or the session-related policy information.

If the session context or the session-related policy information does not include the first information or the first policy information that is previously received by the SMF and that indicates that the traffic steering needs to be performed for the service, it indicates that the session does not have another service for which traffic steering needs to be performed, or that the session is not associated with the traffic steering. Correspondingly, the SMF may modify the session, to delete the second UPF.

Optionally, the AF may send third information to the PCF, where third information indicates that the traffic steering does not need to be performed for the service. Correspondingly, the PCF may determine second policy information based on the third information. The second policy information may indicate how to determine the second user plane network element of the session when the traffic steering does not need to be performed for the service. The second policy information may include the third information, or the second policy information may be obtained by performing a format change based on the third information.

It may be understood that, a manner in which the SMF determines the first UPF is not limited in this application. For example, the SMF may determine, as the first UPF based on the indication information of the first local data network, a UPF supporting access to the first local data network. The identifier of the first local data network may be included in the first information, or included in a PCC rule, or included in a session policy, or may be included in a message sent together with the first information. The message is, for example, a message carrying the PCC rule.

In addition, a sequence of a moment at which the SMF determines the first UPF and a moment at which the SMF determines the second UPF is not limited in this application. To be specific, the first UPF may be determined before S102, or may be determined after the second UPF is determined. For example, in a session modification procedure, the SMF may not modify the first UPF, in other words, the IP anchor point of the session is still the previously determined first UPF.

Optionally, before S102, the SMF may determine whether there is a UPF supporting traffic steering in the session.

For example, in the first traffic steering scenario, the SMF may determine that UPFs associated with an established session do not include a UPF supporting access to the second data network, that is, the current session does not enable a response to the first traffic steering scenario. Then, the SMF may perform S102, to determine the UPF supporting access to the second data network. For another example, in the second traffic steering scenario, the SMF may determine that UPFs associated with the session do not include a UPF supporting access to the central data network, that is, the current session does not enable a response to the second traffic steering scenario. Then, the SMF may perform S102, to determine a UPF supporting access to the second data network.

The following describes a method provided in this application with reference to procedures shown in FIG. 5 and FIG. 6. FIG. 5 is a schematic flowchart in which an SMF selects a second UPF according to a PCC rule. FIG. 6 is a schematic flowchart in which an SMF selects a second UPF based on a session establishment request or a session modification request of a terminal device. The procedure shown in FIG. 5 may be used as an implementation when the first information shown in S101 in FIG. 3 is from a PCF. The procedure shown in FIG. 6 may be used as an implementation when the first information shown in S101 in FIG. 3 is from the terminal.

As shown in FIG. 5, when the first information is from the PCF, a communication method provided in embodiments of this application includes the following steps.

S201: An AF sends traffic steering information. Correspondingly, the PCF receives the traffic steering information.

In an example, the traffic steering information may indicate that traffic steering needs to be performed for a service. For example, the traffic steering information may be included in a service requirement of the service. The service requirement is, for example, a traffic steering requirement (traffic steering requirement).

In S201, the traffic steering information may be the same information as the first information in S101. Therefore, for the traffic steering information, refer to descriptions of the first information in S101. Alternatively, the traffic steering information may be used for determining the first information in S101. For example, after a format change or another operation is performed on the traffic steering information, the first information is obtained.

Optionally, the service requirement may be included in an application function request (AF request) sent by the AF. The application function request may further include service description information, indicating or used for determining a service or a service flow to which the traffic steering information is applicable. The application function request may be used for triggering the establishment or modification of a session. The AF may send the application function request to the PCF. In other words, in S101, the AF may send the first information to the PCF by using the application function request.

S202: The PCF sends first policy information to the SMF. Correspondingly, the SMF receives the first policy information.

The first policy information may indicate to determine a second UPF of the session based on the first information. Optionally, the first policy information may indicate to determine the second UPF of the session based on the first information when the service is detected.

The first policy information may include the first information, indicating that the traffic steering needs to be performed for the service.

In an example, the first policy information may be a PCC rule sent by the PCF to the SMF, or the first policy information is included in a PCC rule, or included in a session policy. For example, the PCF may send the PCC rule to the SMF, and the SMF may determine, according to the PCC rule, how to determine the second UPF in a traffic steering scenario indicated by the first information.

S203: The SMF determines the second UPF based on the first policy information.

S203 may be used as an example of S102 in the procedure in FIG. 3. For example, the first policy information is a PCC rule.

It may be understood that, when detecting the service, the SMF may perform S102 to determine the second UPF. For example, after receiving the first policy information, the SMF may detect whether there is a service or a service flow related to the first policy information in the session. When there is the service or the service flow related to the first policy information, the SMF performs S102 to select the second UPF. When there is no service or service flow related to the first policy information, the SMF does not select the second UPF until a related service or service is detected. For a method for detecting the service by the SMF, refer to related descriptions of detecting the service by the SMF in this application. Repeated parts are not described again.

An IP anchor point of the session is a first UPF. The first UPF belongs to a first local data network. For a procedure of selecting the second UPF, refer to descriptions in S102. Details are not described herein again.

In a possible implementation, the SMF may determine, based on a session context, whether a current session meets the traffic steering indicated by the first information. When the current session meets the traffic steering, the SMF does not need to determine the second UPF again. When the current session does not meet the traffic steering, the SMF needs to determine the second UPF based on the first information. In this application, the session context may be session-related information stored by the SMF. For example, the session context may include at least one of the following: information indicating whether the session supports the traffic steering; and indication information of a local data network supported by the session.

In a possible implementation, the SMF may determine, based on the first policy information, whether a currently established session supports the service, and/or whether an established session meets the traffic steering indicated by the first information, to determine whether to re-establish a session to implement the traffic steering of the service, or determine to implement the traffic steering of the service by modifying the established session.

If the SMF determines that the currently established session supports the service, the established session may be modified by using a session modification procedure, so that the established session meets the traffic steering indicated by the first information.

For example, in S204, the SMF may initiate N4 session establishment to the second UPF. For example, the SMF sends tunnel information of the first UPF to the second UPF by using an N4 session establishment request, and receives tunnel information of the second UPF that is fed back by the second UPF. In S205, the SMF may further initiate N4 session modification to the first UPF. For example, the SMF sends the tunnel information of the second UPF to the first UPF by using an N4 session modification request. The tunnel information of the first UPF and the tunnel information of the second UPF may be used for service transmission between the first UPF and the second UPF.

It may be understood that, the SMF may determine, based on attribute information of the established session and/or indication information of a data network, whether the established session supports the service. For details, refer to descriptions of determining, by the terminal, whether the established session supports the service. Repeated parts are not described again.

If the SMF determines that the currently established session does not support the service, the SMF may establish a new session, so that the new session supports the service and meets the traffic steering indicated by the first information.

The SMF may further determine, based on whether the established session meets the traffic steering indicated by the first information, whether to establish the new session. If the established session does not meet the traffic steering indicated by the first information, the new session may be established. The SMF may determine, based on the indication information of the data network of the established session, whether the established session meets the traffic steering indicated by the first information. For details, refer to descriptions of a manner in which the terminal device determines whether the established session meets the traffic steering indicated by the first information. Details are not described again.

Based on the procedure shown in FIG. 5, the SMF may determine the second UPF based on the first information. Then, the SMF may update a user plane connection based on the determined second UPF, and the session supports transmission of the service by using the second UPF.

As shown in FIG. 6, when the first information is from the terminal, a communication method may include the following steps.

S301: An AF sends traffic steering information. Correspondingly, a PCF receives the traffic steering information.

For an implementation of S301, refer to an implementation of S201. Repeated parts are not described again. In other words, for the traffic steering information, refer to descriptions in S201.

S302: The PCF sends second policy information to the terminal device. Correspondingly, the terminal device receives the second policy information.

The second policy information may include first information.

Optionally, a terminal device policy may further include service information, or referred to as service description information.

The second policy information may be a terminal device policy (UE policy), or the second policy information may be included in a terminal device policy. The terminal device may obtain the first information according to the terminal device policy.

For example, the second policy information may include a URSP in the terminal device policy.

As shown in Table 1, the URSP may include one or more of rule precedence (rule precedence), a traffic descriptor (traffic descriptor), or a list of route selection descriptors (list of route selection descriptors). The list of route selection descriptors may include the first information, or the list of route selection descriptors may be determined based on the first information.

**Table 1**

| | | | | |
|---|---|---|---|---|
| Rule precedence | Traffic descriptor | List of route selection descriptors | | |
| | | Selection sequence or precedence | Route selection component | Validation criteria |

The rule precedence may indicate a selection sequence or precedence of a plurality of URSPs. The terminal device may preferentially perform session establishment or modification or another operation based on a URSP with higher precedence.

The traffic descriptor may be used for determining traffic or a data packet that needs to be transmitted based on a list of route selection descriptors. For example, the traffic descriptor may include identification information of traffic for which traffic steering needs to be performed, for example, a DNN of a data network, a network slice, or a DNAI of the traffic, an IP 3-tuple/5-tuple address of the traffic, or another feature.

The list of route selection descriptors may be used for describing one or more types of traffic steering. Any type of traffic steering may correspond to one or more of information such as selection sequences or precedence (route selection descriptor precedence), route selection components (route selection components), or validation criteria (route selection validation criteria).

The selection sequence or precedence may indicate precedence of a route selection component. The terminal device may preferentially perform session establishment or modification or another operation based on a route selection component with higher precedence. The first information may be carried in the route selection component. The validation criteria may indicate a condition applicable to traffic steering, for example, indicate information such as a location, a time, or a data network to which the traffic steering is applicable.

It may be understood that, the service information in this application may be provided by the AF. Alternatively, the service information may be determined by the PCF based on a service requirement provided by the AF, and a manner of determining the service information is not limited in this application.

S303: The terminal device sends the first information to the SMF based on the second policy information. Correspondingly, the SMF receives the first information.

The first information may be included in a session establishment request or a session modification request sent by the terminal to the SMF.

It may be understood that, S303 may be used as an example of S101 in the procedure shown in FIG. 3.

If the terminal device determines that a currently established session supports the service, but the established session does not meet the traffic steering indicated by the first information, in S303, the terminal device may send the session modification request carrying the first information to the SMF, to trigger the SMF to modify the established session. Correspondingly, both the first UPF and the second UPF are UPFs of the established session. If the terminal device determines that a currently established session does not support the service, in S303, the terminal device may send the session establishment request carrying the first information to the SMF, to trigger the SMF to establish a new session. Correspondingly, both the first UPF and the second UPF are UPFs of the new session.

For determining, by the terminal device, whether the currently established session supports the service and whether the currently established session meets the traffic steering indicated by the first information, refer to descriptions in this application. Details are not described herein again.

S304: The SMF determines a second UPF based on the first information.

S304 may be used as an example of S102 in the procedure in FIG. 3.

For an implementation of S304, refer to descriptions of S102 or descriptions of S203. Repeated parts are not described again.

It should be noted that, in a second traffic steering scenario, the first information may be an identifier of a specific data network, for example, a specific DNN or specific S-NSSAI. The procedure shown in FIG. 6 may be simplified into the following steps.

S305: An AF sends traffic steering information. Correspondingly, a PCF receives the traffic steering information.

For S305, refer to descriptions of S301.

The traffic steering herein may be traffic steering between a local data network and a central data network.

S306: The PCF sends second policy information to the terminal device based on the traffic steering information, where the terminal device measurement may include an identifier of a specific data network. The identifier of the specific data network includes, for example, a specific DNAI or specific S-NSSAI, and is used for identifying that traffic steering required by a service corresponds to the central data network. In other words, it may indicate that a specific DNAI or specific S-NSSAI is used for the service.

The second policy information may be a terminal device policy.

The PCF may not change content of a URSP, and only needs to include the identifier of the specific data network in the URSP. For example, the identifier of the specific data network may be carried in a route selection component.

S307: The terminal initiates the service, and determines, based on the second policy information, whether to reuse a session or establish a new session.

If determining to reuse an established session, the terminal may send a session modification request to the SMF. The session modification request may carry the identifier of the specific data network. After receiving the session modification request, the SMF may select, as a second UPF based on the identifier of the specific data network, a UPF that can access a latest data network.

If determining to establish a new session, the terminal may send a session establishment request. The session establishment request may carry the identifier of the specific data network. After receiving the session establishment request, the SMF may select, as a second UPF based on the identifier of the specific data network, a UPF that can access a latest data network.

For a feature that the second UPF selected by the SMF meets, refer to the foregoing descriptions.

After the second UPF is determined by using S304 and/or S307, for a step of updating a user plane connection, refer to descriptions in the following steps such as S308 to S311.

S305 to S307 are not shown in FIG. 6.

It may be understood that, the SMF may determine whether the established session of the terminal supports the service and/or whether the established session meets the traffic steering indicated by the first information. If the SMF determines that the currently established session does not support the service, the SMF may establish a new session, so that the new session supports the service and meets the traffic steering indicated by the first information. In addition, if the established session does not meet the traffic steering indicated by the first information, a new session may be established. In addition, if the SMF determines that the currently established session supports the service, the established session may be modified by using a session modification procedure, so that the established session meets the traffic steering indicated by the first information.

If the terminal device determines that the currently established session supports the service and meets the traffic steering indicated by the first information, the terminal device may use the established session to transmit the service, and does not need to establish a new session or modify the session. For example, if the first information is carried in a modification request for the established session, after receiving the modification request for the session, the SMF may further determine whether the established session meets the traffic steering indicated by the first information. If the SMF determines that the established session meets the traffic steering indicated by the first information, the SMF may determine that the session does not need to be modified, and the SMF may send a session modification command or session modification response (acknowledgement, ACK) to the terminal. The session modification command or session modification response may carry indication information, indicating that the established session meets the traffic steering indicated by the first information, or indicating that the session does not need to be modified.

For example, the terminal device sends a session establishment request. The procedure shown in FIG. 6 may further include the following steps.

S308: The SMF sends an N4 session establishment request to a first UPF.

Correspondingly, the first UPF provides a session establishment response for the SMF, where the session establishment response carries tunnel information of the first UPF.

S309: The SMF sends the N4 session establishment request to the second UPF.

The N4 session establishment request may include the tunnel information of the first UPF.

Correspondingly, the second UPF sends tunnel information of the second UPF to the SMF.

S310: The SMF sends an N4 session modification request to the first UPF.

The N4 session modification request may carry the tunnel information of the second UPF. Optionally, the first UPF may return an N4 session modification response.

In this way, exchange of the tunnel information of the first UPF and the tunnel information of the second UPF is completed, to support service transmission between the first UPF and the second UPF.

S311: The SMF sends a session establishment accept message to the terminal, indicating that the session is established.

The session establishment accept message may carry an indication indicating that the traffic steering is accepted, for example, carry the second information shown in this application.

Based on the procedure shown in FIG. 6, the SMF may determine the second UPF based on the session establishment request or the session modification request of the terminal device. Then, the SMF may establish or modify the user plane connection based on the determined second UPF, so that the session supports transmission of the service by using the second UPF.

This application further provides a communication method, to enable traffic steering between local data networks or enable traffic steering between a local data network and a central data network in a multi-homed PDU session (multiple PDU session) connection model or a distributed anchor point (distributed anchor point) connection model.

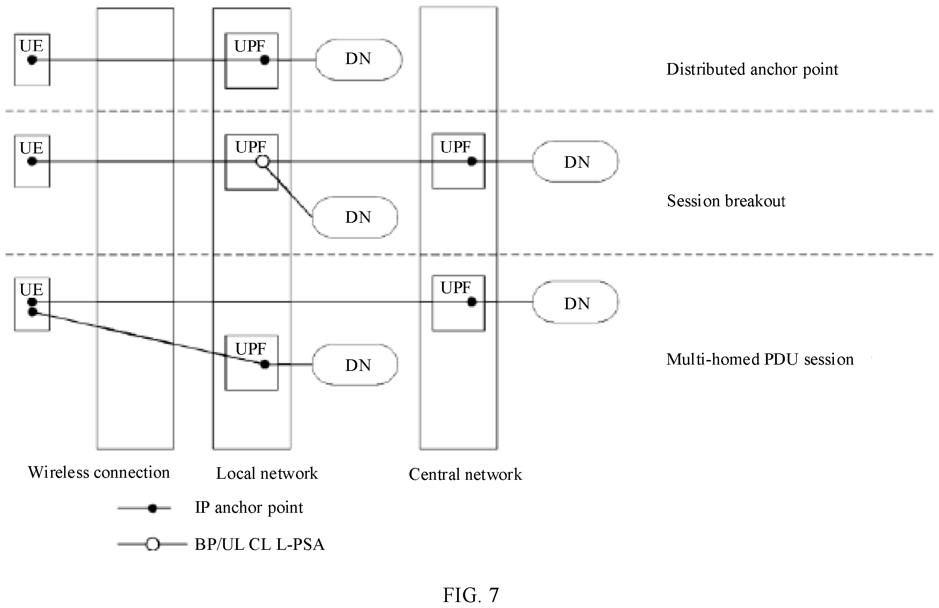

As shown in FIG. 7, in the multi-homed PDU session connection model, a terminal device may separately access a local data network and a central data network by using a plurality of sessions, and different sessions each have an IP anchor point. In the distributed anchor connection model, a terminal device may access a local data network by using a session, and an IP anchor point of the session can access the local data network. In addition, in a session breakout connection model, a terminal device may access a local data network and a central data network by using one session, and an IP anchor point of the session is located in the local data network, or an IP anchor point of the session can access the local data network.

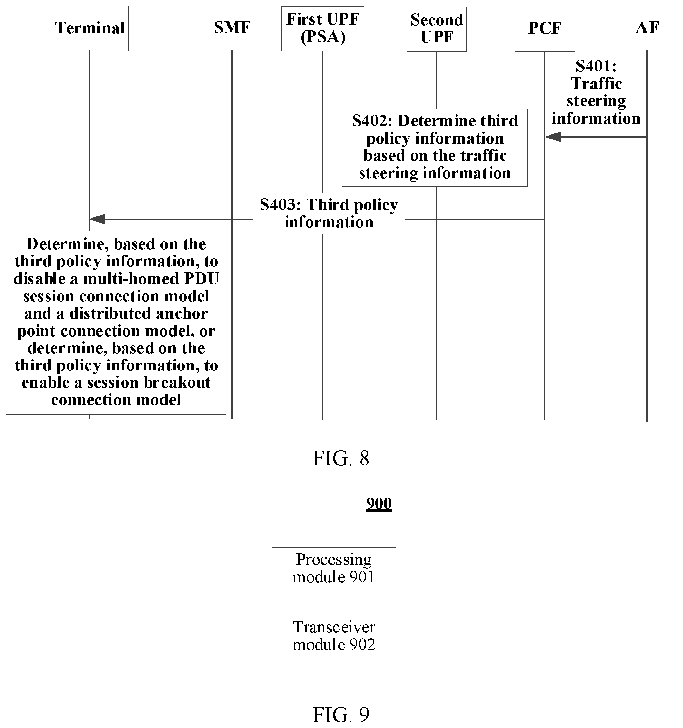

As shown in FIG. 8, a communication method provided in embodiments of this application may include the following steps.

S401: An AF sends traffic steering information.

For S401, refer to descriptions of S201.

The traffic steering information may indicate that traffic steering includes a first traffic steering scenario or a second traffic steering scenario.

S402: A PCF determines third policy information based on the traffic steering information.

The third policy information may indicate to disable a multi-homed PDU session connection model and a distributed anchor point connection model. Alternatively, the third policy information may indicate a terminal device to enable a session breakout (session breakout) connection model. Alternatively, a connection model corresponding to an established session of a terminal device based on the third policy information is a session breakout connection model.

Optionally, a specific representation form of the third policy information is as follows.

The third policy information may be, for example, a URSP. The third policy information may be determined by the PCF based on first information.

For example, the third policy information may include the following configuration:
limiting a session and service continuity (session and service continuity, SSC) mode (mode): SSC mode=1, and
excluding a spatial validity condition (spatial validity condition).

S403: The PCF sends the third policy information to the terminal.

Correspondingly, the terminal receives the third policy information, and determines, based on the third policy information, to disable the multi-homed PDU session connection model and the distributed anchor point connection model. Alternatively, it is determined, based on the third policy information, to enable the session breakout connection model.

Based on a same technical concept, an embodiment of this application provides a communication apparatus. The apparatus includes a corresponding module, unit, or means (means) for performing the method steps in the foregoing method embodiments. The function, unit, or means may be implemented by software, or may be implemented by hardware, or may be implemented by hardware executing corresponding software.

For example, with reference to FIG. 9, an apparatus 900 may include a processing module 901 and a transceiver module 902.

Optionally, the transceiver module 902 may include a sending module and/or a receiving module. The sending module is configured to perform a sending operation in the foregoing method embodiment. The receiving module is configured to perform a receiving operation in the foregoing method embodiment.

It should be noted that, the communication apparatus 900 may include the sending module, but does not include the receiving module. Alternatively, the communication apparatus 900 may include the receiving module, but does not include the sending module. This may be specifically determined depending on whether the foregoing solution performed by the communication apparatus 900 includes a sending action and a receiving action.

The processing module 901 is configured to process data. The transceiver module 902 may implement a corresponding communication function.

Optionally, the communication apparatus 900 may further include a storage module. The storage module may be configured to store instructions and/or data. The processing module 901 may read the instructions and/or the data in the storage module, to enable the communication apparatus 900 to implement the foregoing method embodiment.

For example, the communication apparatus 900 may be a first communication apparatus or a component that may be configured in a first communication apparatus. The first communication apparatus is, for example, a session management network element (for example, an SMF) or a component in a session management network element. The processing module 901 is configured to perform a processing-related operation performed by the SMF in the foregoing method embodiment. The transceiver module 902 is configured to perform a receiving-related operation performed by the SMF in the foregoing method embodiment.

For example, when configured to implement the actions of the SMF shown in FIG. 3, the transceiver module 902 may be configured to receive first information; and the processing module 901 may be configured to determine a second UPF based on the first information. For another example, when configured to implement the actions of the PCF or the terminal shown in FIG. 3, the processing module 901 may be configured to obtain first information, and the transceiver module 902 may be configured to send the first information.

In addition, the communication apparatus 900 may be a second communication apparatus or a component that may be configured in a second communication apparatus. The second communication apparatus is, for example, a policy control function network element (for example, a PCF) or a component in a policy control function network element. The processing module 901 is configured to perform a processing-related operation performed by the PCF in the foregoing method embodiment. The transceiver module 902 is configured to perform a receiving-related operation performed by the PCF in the foregoing method embodiment.

In addition, the communication apparatus 900 may be a third communication apparatus or a component that may be configured in a third communication apparatus. The third communication apparatus is, for example, an application function network element (for example, an AF) or a component in an application function network element. The processing module 901 is configured to perform a processing-related operation performed by the AF in the foregoing method embodiment. The transceiver module 902 is configured to perform a receiving-related operation performed by the AF in the foregoing method embodiment.

In addition, the communication apparatus 900 may be a fourth communication apparatus or a component that may be configured in a fourth communication apparatus. The fourth communication apparatus is, for example, a terminal device or a component in a terminal device. The processing module 901 is configured to perform a processing-related operation performed by the terminal in the foregoing method embodiment. The transceiver module 902 is configured to perform a receiving-related operation performed by the terminal in the foregoing method embodiment.

It should be understood that, all related content of the steps in the foregoing method embodiment may be cited in function descriptions of corresponding functional modules. Details are not described herein again.

The processing module 901 in the foregoing embodiment may be implemented as at least one processor or processor-related circuit. The transceiver module 902 may be implemented as a transceiver or a transceiver-related circuit. The transceiver module 902 may alternatively be referred to as a communication module or a communication interface.

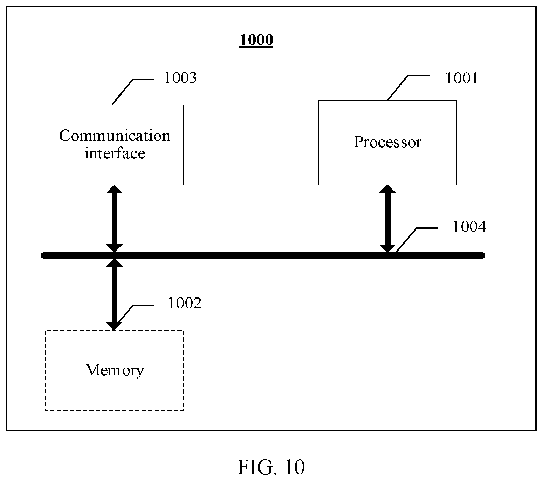

The following shows a diagram of another structure of a communication apparatus according to an embodiment of this application. As shown in FIG. 10, an embodiment of this application further provides a communication apparatus 1000, including:
at least one processor 1001 and a communication interface 1003 that is in communication connection to the at least one processor 1001, where the at least one processor 1001 executes instructions stored in a memory 1002, so that the apparatus is enabled to perform the method steps in the foregoing method embodiment through the communication interface 1003.

Optionally, the memory 1002 is located outside the apparatus 1000.

Optionally, the apparatus 1000 includes the memory 1002. The memory 1002 is connected to the at least one processor 1001, and the memory 1002 stores the instructions that can be executed by the at least one processor 1001. In FIG. 10, a dashed line indicates that the memory 1002 is optional for the apparatus 1000.

The processor 1001 and the memory 1002 may be coupled via an interface circuit, or may be integrated together. This is not limited herein.

A specific connection medium between the processor 1001, the memory 1002, and the communication interface 1003 is not limited in this embodiment of this application. In this embodiment of this application, the processor 1001, the memory 1002, and the communication interface 1003 are connected to each other through a bus 1004 in FIG. 10. The bus is represented by a bold line in FIG. 10. A manner of connection between other components is merely an example for description, and is not limited thereto. The bus may be classified into an address bus, a data bus, a control bus, and the like. For ease of representation, only one thick line is used for representing the bus in FIG. 10, but this does not mean that there is only one bus or only one type of bus.

A first communication apparatus is used as an example. When the communication apparatus 1000 is the first communication apparatus, the first communication apparatus may include a processor, a memory, and a transceiver. The memory may store computer program code, and the transceiver includes a transmitter and a receiver.

The processor is mainly configured to: process a communication protocol and communication data, control the first communication apparatus, execute a software program, process data of the software program, and the like. The memory is mainly configured to store the software program and the data. The transmitter is configured to send a signal to another communication apparatus or device, and the receiver is configured to receive a signal from the another communication apparatus or device.

When the communication apparatus 1000 is a chip in the first communication apparatus, the chip may include a processor, a memory, and a transceiver. The transceiver may be an input/output circuit or a communication interface. The processor may be a processing module, a microprocessor, or an integrated circuit integrated on the chip. The sending operation performed by the first communication apparatus in the foregoing method embodiment may be understood as an output of the chip, and the receiving operation performed by the first communication apparatus in the foregoing method embodiment may be understood as an input of the chip.

It should be understood that, the processor mentioned in embodiments of this application may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that, the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (Synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be noted that, the memory described in this specification aims to include but is not limited to these memories and any memory of another proper type.

Based on a same technical concept, an embodiment of this application further provides a computer-readable storage medium, including a program or instructions. When the program or the instructions are run on a computer, the method in the foregoing method embodiment is performed.

Based on a same technical concept, an embodiment of this application further provides a computer program product, including instructions. When the instructions are run on a computer, the method in the foregoing method embodiment is performed.

Based on a same technical concept, an embodiment of this application further provides a communication system. The communication system may include one or more of a first communication apparatus, a second communication apparatus, a third communication apparatus, or a fourth communication apparatus. For example, the communication system may be configured to implement any method procedure in FIG. 3, FIG. 5, FIG. 6, or FIG. 8.

A person skilled in the art should understand that, embodiments of this application may be provided as a method, a system, or a computer program product. Therefore, this application may use a form of a hardware only embodiment, a software only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that, computer program instructions may be used for implementing each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, comprising:
receiving first information, wherein the first information indicates that traffic steering needs to be performed for a service, the service is associated with a session of a terminal, an internet protocol IP anchor point of the session is a first user plane network element, the first user plane network element can access a first data network, and the first data network is used for providing the service for the terminal; and
determining a second user plane network element of the session based on the first information, wherein
the traffic steering comprises traffic steering between the first data network and a second data network, the second user plane network element can access the second data network, and the second data network is used for providing the service for the terminal.

2. The method according to claim 1, wherein the first data network comprises a first local data network, and the second data network comprises a second local data network; or
the first data network comprises a first local data network, and the second data network comprises a central data network.

3. The method according to claim 2, wherein the second data network comprises the central data network, and
the determining the second user plane network element of the session based on the first information comprises:
determining, as the second user plane network element, a user plane network element that can access all local data networks.

4. The method according to claim 2 or 3, wherein the second data network comprises the central data network; and
a delay for the first data network to provide the service for the terminal is shorter than a delay for the second data network to provide the service for the terminal; or
a distance between the first user plane network element and the terminal is less than a distance between the second user plane network element and the terminal.

5. The method according to any one of claims 1 to 4, wherein the first information comprises indication information of the second data network.

6. The method according to any one of claims 1 to 5, wherein the method further comprises:
sending second information, wherein the second information indicates that the traffic steering is accepted.

7. The method according to any one of claims 1 to 6, wherein the first information is from a policy control function network element.

8. The method according to claim 7, wherein the first information is comprised in first policy information from the policy control function network element, and the first policy information indicates to determine the second user plane network element based on the first information.

9. The method according to any one of claims 1 to 6, wherein the first information is from the terminal.

10. The method according to claim 9, wherein
the first information is comprised in a session establishment request from the terminal; or
the first information is comprised in a session modification request from the terminal.

11. A communication method, comprising:
receiving first information from an application function network element, wherein the first information indicates that traffic steering needs to be performed for a service, the service is associated with a session of a terminal, an IP anchor point of the session is a first user plane network element, the first user plane network element can access a first data network, and the first data network is used for providing the service for the terminal; and
sending policy information based on the first information, wherein the policy information indicates to determine a second user plane network element of the session based on the first information, wherein
the traffic steering comprises traffic steering between the first data network and a second data network, the second user plane network element can access the second data network, and the second data network is used for providing the service for the terminal.

12. The method according to claim 11, wherein the first data network comprises a first local data network, and the second data network comprises a second local data network; or
the first data network comprises a first local data network, and the second data network comprises a central data network.

13. The method according to claim 11 or 12, wherein the first information comprises indication information of the second data network.

14. The method according to any one of claims 11 to 13, wherein the method further comprises:
receiving second information, wherein the second information indicates that the traffic steering is accepted.

15. The method according to any one of claims 11 to 14, wherein the first information is comprised in the policy information.

16. A communication method, comprising:
sending first information, wherein the first information indicates that traffic steering needs to be performed for a service, the service is associated with a session of a terminal, an IP anchor point of the session is a first user plane network element, the first user plane network element can access a first data network, and the first data network is used for providing the service for the terminal, wherein
the traffic steering comprises traffic steering between the first data network and a second data network.

17. The method according to claim 16, wherein the first data network comprises a first local data network, and the second data network comprises a second local data network; or
the first data network comprises a first local data network, and the second data network comprises a central data network.

18. The method according to claim 16 or 17, wherein the first information comprises indication information of the second data network.

19. A communication method, comprising:
receiving first information from a policy control function network element, wherein the first information indicates that traffic steering needs to be performed for a service, the service is associated with a session of a terminal, an IP anchor point of the session is a first user plane network element, the first user plane network element can access a first data network, and the first data network is used for providing the service for the terminal; and
sending the first information to a session management network element.

20. The method according to claim 19, wherein the first data network comprises a first local data network, and the second data network comprises a second local data network; or
the first data network comprises a first local data network, and the second data network comprises a central data network.

21. The method according to claim 19 or 20, wherein the first information comprises indication information of the second data network.

22. The method according to any one of claims 19 to 21, wherein the method further comprises:
receiving second information, wherein the second information indicates that the traffic steering is accepted.

23. The method according to any one of claims 19 to 22, wherein the first information is comprised in a session establishment request; or
the first information is comprised in a session modification request.

24. The method according to claim 23, wherein the sending the first information to the session management network element comprises:
determining, based on attribute information of the session, that the session supports the service; and
sending the session modification request, wherein the first information is comprised in the session modification request.

25. The method according to claim 23, wherein the sending the first information to the session management network element comprises:
determining, based on attribute information of an established session of the terminal, that the established session does not support the service; and
sending the session establishment request, wherein the first information is comprised in the session establishment request.

26. The method according to claim 23, wherein the sending the first information to the session management network element comprises:
determining, based on indication information of a data network of the established session and/or traffic steering information, that the established session does not support the traffic steering, wherein the traffic steering information indicates whether the established session supports the traffic steering; and
sending the session establishment request, wherein the first information is comprised in the session establishment request.

27. A communication apparatus, comprising a unit or a module configured to perform the method according to any one of claims 1 to 10, or comprising a unit or a module configured to perform the method according to any one of claims 11 to 15, or comprising a unit or a module configured to perform the method according to any one of claims 16 to 18, or comprising a unit or a module configured to perform the method according to any one of claims 19 to 26.

28. A communication apparatus, comprising a processor, wherein the processor is configured to execute a computer program or instructions, to implement the method according to any one of claims 1 to 10, or implement the method according to any one of claims 11 to 15, or implement the method according to any one of claims 16 to 18, or implement the method according to any one of claims 19 to 26.

29. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 15 is implemented, or the method according to any one of claims 16 to 18 is implemented, or the method according to any one of claims 19 to 26 is implemented.

30. A computer program product, wherein when the computer program product is executed by a computer, the computer is caused to perform the method according to any one of claims 1 to 10, or perform the method according to any one of claims 11 to 15, or perform the method according to any one of claims 16 to 18, or perform the method according to any one of claims 19 to 26.

31. A communication system, comprising a first communication apparatus configured to perform the method according to any one of claims 1 to 8 and a second communication apparatus configured to perform the method according to any one of claims 11 to 15.

32. The system according to claim 31, wherein the system further comprises a third communication apparatus configured to perform the method according to any one of claims 16 to 18.

33. A communication system, comprising a first communication apparatus configured to perform the method according to any one of claims 1 to 6, or claim 9 or 10, and a fourth communication apparatus configured to perform the method according to any one of claims 19 to 26.

34. A communication method, comprising:
receiving, by a second communication apparatus, first information from a third communication apparatus, wherein the first information indicates that traffic steering needs to be performed for a service, the service is associated with a session of a terminal, an IP anchor point of the session is a first user plane network element, the first user plane network element can access a first data network, and the first data network is used for providing the service for the terminal;
sending, by the second communication apparatus, policy information to a first communication apparatus based on the first information, wherein the policy information indicates to determine a second user plane network element of the session based on the first information, the traffic steering comprises traffic steering between the first data network and a second data network, the second user plane network element can access the second data network, and the second data network is used for providing the service for the terminal; and
receiving, by the first communication apparatus, the policy information, and determining the second user plane network element based on the first information.

35. The method according to claim 34, wherein the method further comprises:
sending, by the third communication apparatus, the first information to the second communication apparatus.

36. A communication method, comprising:
receiving, by a fourth communication apparatus, first information from a second communication apparatus, wherein the first information indicates that traffic steering needs to be performed for a service, the service is associated with a session of the fourth communication apparatus, an IP anchor point of the session is a first user plane network element, the first user plane network element can access a first data network, and the first data network is used for providing the service for the fourth communication apparatus;
sending the first information to a first communication apparatus; and
receiving, by the first communication apparatus, the first information from the fourth communication apparatus, and determining a second user plane network element of the session based on the first information, wherein
the traffic steering comprises traffic steering between the first data network and a second data network, the second user plane network element can access the second data network, and the second data network is used for providing the service for the fourth communication apparatus.
